# EUROPÄISCHE PATENTSCHRIFT

(11) **EP 3 414 036 B1**
(45) Veröffentlichungstag und Bekanntmachung des Hinweises auf die Patenterteilung: **26.05.2021**
(21) Anmeldenummer: 17708191.6
(22) Anmeldetag: 21.02.2017
(51) Int. Cl.: B22F 3/105, B29C 64/386, B33Y 10/00, B33Y 50/00, G05B 19/4099, G06F 30/17, B22F 5/04, G06F 30/23, G06F 119/18

(54) **VERFAHREN ZUR BESTIMMUNG DER ORIENTIERUNG EINES ADDITIV HERZUSTELLENDEN BAUTEILS UND COMPUTERLESBARES MEDIUM**
PROCESS FOR DETERMINING THE BUILD ORIENTATION OF AN ARTICLE TO BE MANUFACTURED THROUGH ADDITIVE MANUFACTURING AND COMPUTER-READABLE MEDIUM
PROCÉDÉ DE DÉTERMINATION DE L'ORIENTATION D'UN ARTICLE FABRIQUÉ PAR PROCÉDÉ ADDITIF ET MOYEN DE LECTURE INFORMATIQUE

(30) Priorität: 17.03.2016 DE 102016204412
(43) Veröffentlichungstag der Anmeldung: 19.12.2018
(73) Patentinhaber: Siemens Energy Global GmbH & Co. KG, 81739 München (DE)
(72) Erfinder: GEISEN, Ole, 10781 Berlin (DE)
(86) Internationale Anmeldenummer: PCT/EP2017/053845
(87) Internationale Veröffentlichungsnummer: WO 2017/157620

(56) Entgegenhaltungen:
- WO-A1-2013/155500
- WO-A2-2015/157703
- NIKHIL PADHYE ET AL: "Multi-objective optimisation and multi-criteria decision making in SLS using evolutionary approaches", RAPID PROTOTYPING JOURNAL, Bd. 17, Nr. 6, 4. Oktober 2011 (2011-10-04), Seiten 458-478, XP055365395, GB ISSN: 1355-2546, DOI: 10.1108/13552541111184198
- YICHA ZHANG ET AL: "Build orientation optimization for multi-part production in additive manufacturing", JOURNAL OF INTELLIGENT MANUFACTURING, 28. Februar 2015 (2015-02-28), XP055364208, GB ISSN: 0956-5515, DOI: 10.1007/s10845-015-1057-1
- RAZVAN PACURAR ET AL: "Research on the Influence of the Orientation of Deposited Material on the Mechanical Properties of Samples Made from ABS M30 Material Using the 3D Printing Method", INNOVATIVE MANUFACTURING ENGINEERING : SELECTED, PEER REVIEWED PAPERS FROM THE 19TH INNOVATIVE MANUFACTURING ENGINEERING 2015 (IMANE 2015), MAY 21-22, IASI, ROMANIA IN: APPLIED MECHANICS AND MATERIALS; ISSN 1660-9336; VOL. 809-810; [APPLIED MECHANICS, Bd. 809-810, 1. Januar 2015 (2015-01-01), Seiten 429-434, XP008184235, DOI: 10.4028/WWW.SCIENTIFIC.NET/AMM.809-810.429 ISBN: 978-3-03835-663-9 [gefunden am 2015-11-01]
- GIOVANNI MORONI ET AL: "Functionality-based Part Orientation for Additive Manufacturing", PROCEDIA CIRP, Bd. 36, 1. Januar 2015 (2015-01-01), Seiten 217-222, XP055364211, NL ISSN: 2212-8271, DOI: 10.1016/j.procir.2015.01.015
- Pavel Hanzl ET AL: "The Influence of Processing Parameters on the Mechanical Properties of SLM Parts", Procedia Engineering, 31 December 2015 (2015-12-31), pages 1405-1413, XP055621013, DOI: https://doi.org/10.1016/j.proeng.2015.01.5 10 Retrieved from the Internet: URL:https://pdf.sciencedirectassets.com/27 8653/1-s2.0-S1877705815X00051/1-s2.0-S1877 705815005378/main.pdf?X-Amz-Date=20190911T 094857Z&X-Amz-Algorithm=AWS4-HMAC-SHA256&X -Amz-Signature=f56098c6dbd293336cce268913d 2fb9bd6fcec92758827f6b1d3fdece251e031&X-Am z-Credential=ASIAQ3PHCVTYWZ656QQI%2F201909 11%2Fus-ea [retrieved on 2019-09-11]

## Beschreibung

Die vorliegende Erfindung betrifft ein Verfahren zur Bestimmung der Orientierung eines additiv herzustellenden Bauteils in oder relativ zu einer Aufbaurichtung in einer Anlage zur additiven Herstellung sowie ein Verfahren zur additiven Herstellung des Bauteils. Weiterhin betrifft die vorliegende Erfindung ein computerlesbares Medium.

Bei dem Bauteil handelt es sich um ein additiv oder generativ hergestelltes oder herzustellendes Bauteil. Erfindungsgemäß handelt es sich um eine Komponente einer Turbine, wie einer Dampf- oder Gasturbine.

Bekannte schichtweise, additive oder generative Herstellungsverfahren sind insbesondere das selektive Laserschmelzen (SLM: englisch für "selective laser melting"), selektive Lasersintern (SLS: englisch für "selective laser sintering") und das Elektronenstrahlschmelzen (EBM: englisch für "electron beam melting").

Additive Fertigungsverfahren werden durch ihr iteratives Aufoder Aneinanderfügen von Lagen, Schicht- oder Volumenelementen, beispielsweise aus dem Pulverbett, zur Herstellung dreidimensionaler Gegenstände eingesetzt, und finden ihre Anwendung häufig im Bereich der Herstellung von Prototypen sowie inzwischen auch in der Bauteilherstellung, insbesondere bei der Anfertigung individuell geformter Bauteile. Typische Schichtdicken liegen zwischen 20 µm und 60 µm.

Als Ausgangsmaterialien steht eine Vielzahl unterschiedlicher Werkstoffe zur Verfügung, die sowohl in Pulver- oder Granulatform, aber auch in Form von Fluiden bspw. als Suspensionen, vorliegen können. Bei generativen Herstellungsverfahren, wird der dreidimensionale Gegenstand durch eine Vielzahl einzelner Materialschichten, die auf einer absenkbaren Bau- oder Herstellungsplattform nacheinander abgeschieden und anschließend einzeln einem lokal selektiven Verfestigungsprozess unterzogen werden, gebildet.

Ein Verfahren zum selektiven Laserschmelzen ist beispielsweise bekannt aus EP 1 355 760 B1.

Ein Einfluss der Aufbaurichtung auf mechanische Eigenschaften einer additiv aufgebauten Testprobe ist weiterhin beschrieben auf den Seiten 1410 bis 1411 des Artikels "The influence of Processing Parameters on the Mechanical Properties of SLM Parts" von Procedia Engineering 100 (2015).

Es ist bekannt, dass additiv gefertigte Bauteile häufig anisotrope Material- oder Struktureigenschaften aufweisen und dementsprechend ihre Festigkeit oder Stabilität und damit Anwendbarkeit für bestimmte Anforderungen richtungsabhängig ist. Problematisch kann diesbezüglich sein, dass eine Eigenschaft des Bauteils, beispielsweise eine Festigkeit oder Belastbarkeit desselben, für eine spezifische Anwendung fertigungsbedingt nicht ausreichend ist.

Es ist daher eine Aufgabe der vorliegenden Erfindung, Mittel anzugeben, mit welchen additiv hergestellte Bauteile vielseitiger einsetzbar sind. Insbesondere können additive Fertigungstechnologien inhärente Schwächen, beispielsweise die Struktur des entsprechenden Materials betreffend, durch das erfindungsgemäße Verfahren ausgeglichen werden. Insbesondere kann mit dem vorliegenden Verfahren ein Bauteil derart additiv aufgebaut werden, dass seine Struktur oder andere Eigenschaften des Bauteils hinsichtlich der Anforderungen optimiert sind.

Diese Aufgabe wird durch den Gegenstand der unabhängigen Ansprüche gelöst. Vorteilhafte Ausgestaltungen sind Gegenstand der abhängigen Patentansprüche.

Ein Aspekt der vorliegenden Erfindung betrifft ein Verfahren zur Bestimmung der Orientierung eines additiv herzustellenden Bauteils, umfassend das Bereitstellen einer Bauteilgeometrie für das additiv herzustellende Bauteil. Die Bauteilgeometrie kann beispielsweise vorbestimmt sein und/oder in Form von technischen Zeichnungen oder Steuerungsprogrammen der rechnerunterstützten Konstruktion (CAM: Computer Aided Manufacturing) vorliegen.

Das Verfahren umfasst weiterhin das Definieren mindestens einer Eigenschaft des additiv herzustellenden Bauteils. Die Eigenschaft bezeichnet vorzugsweise eine physikalische Größe oder Anforderung, hinsichtlich der eine Orientierung des Bauteils im Rahmen einer additiven Herstellung mit dem vorliegenden Verfahren vorzugsweise optimiert werden kann.

Das Verfahren umfasst weiterhin das Untersuchen einer Richtungsabhängigkeit oder Anisotropie der genannten Eigenschaft abhängig von der bereitgestellten oder vorliegenden Bauteilgeometrie. Insbesondere kann eine Richtungsabhängigkeit der mechanischen Eigenschaften des Bauteils von seiner Geometrie, beispielsweise seiner Breite, Länge, seinem Durchmesser oder seiner spezifischen Form abhängen. Insbesondere variieren Eigenschaften additiv hergestellter Bauteile, wie oben beschrieben, häufig entlang von Raum- oder (Haupt-) Symmetrieachsen des Bauteils.

Das Verfahren umfasst weiterhin das Bestimmen und/oder Anzeigen einer oder mehrerer bevorzugter Orientierungen des additiv herzustellenden Bauteils in einer Anlage zur additiven Herstellung anhand der Untersuchung der Richtungsabhängigkeit. Die bevorzugte Orientierung kann eine günstige oder gegebenenfalls auch eine optimale Orientierung sein.

Mit dem Begriff "Orientierung" ist eine Ausrichtung, vorzugsweise von einer oder mehrerer Hauptsymmetrieachsen des Bauteils relativ zu einer Aufbaurichtung der additiven Herstellung, gemeint. Insbesondere kann mit der Orientierung ein Raumwinkel oder Vektor bezeichnet sein, welcher die Ausrichtung einer Hauptsymmetrieachse des Bauteils (Geometrie) beispielsweise relativ zu der Aufbaurichtung definiert.

Eine Aufbaurichtung der additiven Herstellung kann insbesondere abhängig von der jeweiligen Herstellungstechnologie sein. Im Falle von pulverbett-basierten Herstellungsverfahren ist die Aufbaurichtung beispielsweise senkrecht zu einer vom Pulverbett gebildeten Oberfläche orientiert.

In einer Ausgestaltung wird die Bauteilgeometrie bzw. das Design des Bauteils durch oder mithilfe einer rechnerunterstützten Konstruktion (CAD: Computer Aided Design) bereitgestellt oder vorgegeben. Mit anderen Worten ist das Design des Bauteils vorzugsweise bereits festgelegt und liegt in Form von technischen Zeichnungen oder einer CAD-Datei vor.

Die Eigenschaft ist eine material- und geometrieabhängige Eigenschaft bzw. eine Eigenschaft die von dem Material des additiv herzustellenden Bauteils oder seines Ausgangsmaterials und von seinem Design oder seiner Geometrie abhängt.

In einer Ausgestaltung ist die Eigenschaft eine von der Herstellung des Bauteils abhängige Eigenschaft. Insbesondere kann die oben beschriebene Richtungsabhängigkeit der Eigenschaft von dem jeweiligen additiven Herstellungsverfahren abhängen.

Erfindungsgemäß ist die Eigenschaft eine mechanische Eigenschaft des additiv herzustellenden Bauteils.

Erfindungsgemäß ist die Eigenschaft eine Kriechfestigkeit bzw. -belastbarkeit des additiv herzustellenden Bauteils.

Die Kriechfestigkeit kann im Rahmen des vorliegenden Verfahrens mit Vorteil für das additiv herzustellende Bauteil bzw. hinsichtlich seiner individuellen Geometrie und/oder Anforderung optimiert werden.

In einer Ausgestaltung wird die Richtungsabhängigkeit mittels einer numerischen Simulation, beispielsweise einer Finite-Elemente-Methode, untersucht.

In einer Ausgestaltung wird die Richtungsabhängigkeit mittels eines empirischen, approximativen und/oder phänomenologisch Verfahren untersucht.

In einer Ausgestaltung ist das beschriebene Verfahren in einem Software-Modul zur numerischen Simulation und/oder in einem Modul für die rechnerunterstützte Konstruktion implementiert.

Die Richtungsabhängigkeit der Eigenschaft wird anhand einer Strukturanalyse von additiv hergestelltem Material untersucht. Die Eigenschaft ist werkstoff- oder materialabhängig. Erfindungsgemäß werden die Kristallstruktur als auch allgemein die Materialphasen des Bauteils untersucht.

In einer Ausgestaltung wird die (Richtungs-)Abhängigkeit der Eigenschaft mindestens entlang einer Aufbaurichtung der additiven Herstellung untersucht.

In einer Ausgestaltung wird die (Richtungs-)Abhängigkeit der Eigenschaft mindestens entlang einer Aufbaurichtung der additiven Herstellung und entlang einer zu der Aufbaurichtung senkrechten Richtung untersucht.

Die genannte Aufbaurichtung ist vorzugsweise eine für das jeweilige additive Herstellungsverfahren charakteristische Aufbaurichtung. Vorzugsweise wird die Richtungsabhängigkeit entlang einer Vielzahl von verschiedenen Richtungen, beispielsweise relativ zur Aufbaurichtung geneigten Richtungen, untersucht.

In einer Ausgestaltung wird die Richtungsabhängigkeit der Eigenschaft empirisch, beispielsweise anhand von Simulationen, untersucht.

In einer Ausgestaltung wird ein Ergebnis der Untersuchung der Richtungsabhängigkeit und/oder ein Ergebnis der Bestimmung der Orientierung des additiv herzustellenden Bauteils in einer Datenbank gespeichert. Durch diese Ausgestaltung kann die additive Herstellungstechnologie in besonders vorteilhafterweise verbessert werden, als beispielsweise auf eine Empirie zurückgegriffen werden kann.

In einer Ausgestaltung wird das Ergebnis für ein anschließendes Verfahren zur Bestimmung einer weiteren Orientierung, beispielsweise eines weiteren additiv herzustellenden Bauteils, herangezogen.

In einer Ausgestaltung wird im Rahmen des beschriebenen Verfahrens eine Mehrzahl von bevorzugten Orientierungen bestimmt.

In einer Ausgestaltung wird dem Anwender des beschriebenen Verfahrens eine optimale Orientierung des additiv herzustellenden Bauteils, zweckmäßigerweise relativ zu einer Aufbaurichtung, angezeigt.

In einer Ausgestaltung werden einem Anwender des beschriebenen Verfahrens, beispielsweise anschließend an die Bestimmung der Mehrzahl von günstigen oder bevorzugten Orientierungen, die bevorzugten Orientierungen angezeigt, wobei der Anwender zwischen den verschiedenen bevorzugten Orientierungen wählen kann.

Ein weiterer Aspekt der vorliegenden Erfindung betrifft ein Verfahren zur additiven Herstellung eines Bauteils umfassend das beschriebene Verfahren zur Bestimmung der Orientierung des Bauteils. Das Verfahren zur additiven Herstellung umfasst weiterhin das additive Aufbauen des Bauteils auf einer Bauplattform der Anlage entlang der bestimmten optimalen Orientierung oder entlang einer, beispielsweise gewählten, bevorzugten Orientierung.

In einer Ausgestaltung ist oder wird das oben beschriebene Verfahren oder zumindest Teile desselben durch Software oder ein Datenverarbeitungsprogram implementiert, beispielsweise eine CAD- oder CAM-Software.

Ein weiterer Aspekt der vorliegenden Erfindung betrifft ein computerlesbares Medium, umfassend ausführbare Programmanweisungen, welche geeignet sind, eine Datenverarbeitungseinrichtung die Schritte des Untersuchens und des Bestimmens - wie oben beschrieben - durchführen zu lassen.

Ausgestaltungen, Merkmale und/oder Vorteile, die sich vorliegend auf die Vorrichtung und/oder die Anlage beziehen, können sich ferner auf das Verfahren und/oder das Bauteil beziehen, und umgekehrt.

Weitere Einzelheiten der Erfindung werden nachfolgend anhand der Zeichnungen beschrieben.
- Figur 1: zeigt eine schematische Schnitt- oder Seitenansicht eines additiv aufgebauten Bauteils.
- Figur 2: zeigt eine schematische vereinfachte Verteilung von Kristallkörnern des Bauteils aus Figur 1 entlang der Achse X aus Fig. 1 geschnitten.
- Figur 3: zeigt eine schematische vereinfachte Verteilung von Kristallkörnern des Bauteils aus Figur 1 entlang einer Richtung senkrecht zur Achse X geschnitten.
- Figur 4: deutet anhand eines schematischen Flussdiagramms Verfahrensschritte des erfindungsgemäßen Verfahrens an.
- Figur 5: deutet schematisch verschiedene Orientierungen eines Bauteils in einer Anlage zur additiven Herstellung an.

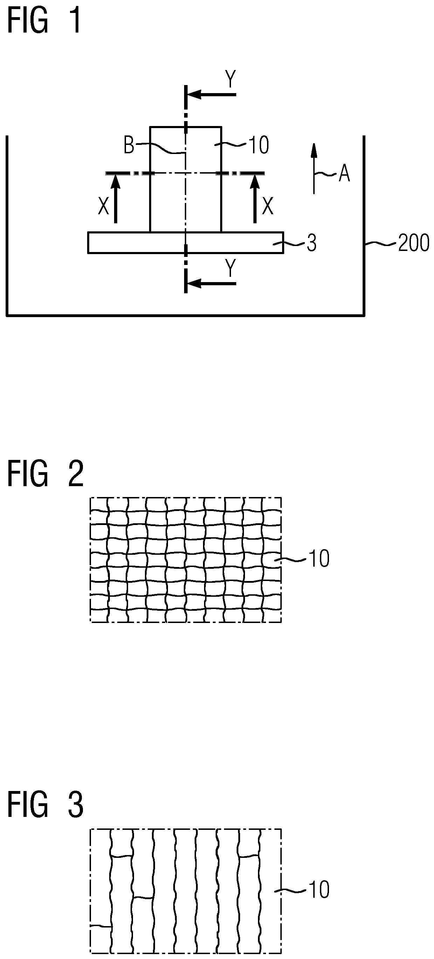

Figur 1 zeigt eine Bauplattform 3. Auf der Bauplattform 3 ist ein Bauteil 10 angeordnet. Das Bauteil 10 kann sowohl fertig als auch lediglich teilweise hergestellt oder aufgebaut sein und sich dementsprechend noch in der Herstellung bzw. im additiven Aufbau befinden. Das Bauteil 10 ist vorzugsweise durch ein additives Herstellungsverfahren, vorzugsweise mittels selektivem Laserschmelzen (SLM) auf der Bauplattform 3 hergestellt bzw. herstellbar. Dabei ist das Bauteil 10 vorzugsweise stoffschlüssig und/oder metallurgisch mit der Bauplattform 3 verbunden. Alternativ kann das Bauteil durch andere additive Herstellungsverfahren, beispielsweise selektives Lasersintern, Elektronenstrahlschmelzen oder auch Laserauftragschweißen (LMD: laser metal deposition) hergestellt oder aufgebaut sein oder werden.

Das Bauteil 10 wird zweckmäßigerweise entlang einer Aufbauoder Schichtrichtung A additiv aufgebaut (siehe unten). Im Falle von pulverbett-basierten Verfahren wie beispielsweise selektivem Laserschmelzen ist die Aufbaurichtung A festgelegt bzw. invariant. Die Oberfläche eines entsprechenden Pulverbettes (nicht explizit dargestellt) ist vorzugsweise mit seiner Oberflächennormalen parallel zu der Aufbaurichtung A ausgerichtet.

Beispielweise im Falle eines durch Laserauftragschweißen herzustellenden Bauteils kann die Aufbaurichtung variabel oder veränderbar sein, z.B. je nach Anordnung einer Pulverdüse bzw. eines entsprechenden Belichtungslasers.

Das Bauteil 10 weist eine Hauptsymmetrieachse B auf. Die Hauptsymmetrieachse B entspricht einer Längsachse des Bauteils 10, wobei lediglich beispielhaft eine einfache rechteckige, oder räumlich gesehen, quaderförmige Geometrie, gewählt wurde. Im vorliegenden Fall ist die Hauptsymmetrieachsen B parallel zur Aufbaurichtung A.

In Figur 1 ist weiterhin mit dem Bezugszeichen 200 eine Anlage zur additiven Herstellung angedeutet, zu welcher auch die Bauplattform 3 gehören kann.

Weiterhin ist in Figur 1 eine Schnittebene, -achse oder -richtung X eingezeichnet.

Figur 2 zeigt einen vereinfachten schematischen Schnitt des Bauteils 10 entlang der in Figur 1 angedeuteten Ebene X-X. Es sind eine Vielzahl von Bereichen 1 dargestellt. Die Bereiche 1 deuten insbesondere eine polykristalline Material- oder Kornstruktur an, wobei jeder Bereich 1 oder jedes Feld eine bestimmte Kristallorientierung, Kornorientierung oder Materialphase, beispielsweise mit zusammenhängenden kristallinen Bereichen (Materialkörnern) aufweist. Mit anderen Worten ist beispielsweise eine polykristalline Materialstruktur zu erkennen, wie sie, entlang der Richtung X geschnitten, für ein durch SLM aufgebautes Bauteil charakteristisch ist.

Figur 3 zeigt einen vereinfachten schematischen Schnitt des Bauteils 10 entlang der in Figur 1 angedeuteten Ebene Y-Y. Es ist insbesondere eine stängelartige Material- oder Kornstruktur zu erkennen, wobei die Bereiche 1 - analog zur Figur 2 - einzelne Materialkörnern und/oder Kristallorientierungen darstellen sollen. Im Unterschied zur Figur 2 ist in Figur 3 zu erkennen, dass die Bereiche 1 oder Kristallkörner im Wesentlichen in Aufbaurichtung A "wachsen", aufgebaut oder hergestellt sind, wohingegen die Figur 2 lediglich eine gleichförmige polykristalline Verteilung zeigt.

Durch von Figur 2 abweichende, deutlich gröbere bzw. eher gerichtete Kornverteilung der Figur 3 wird die Anisotropie oder Richtungsabhängigkeit von additiven Herstellungsverfahren am Beispiel des selektiven Laserschmelzens deutlich. Die genannte Anisotropie ist insbesondere dem schichtweisen Aufbau und/oder den im Wege der Herstellung auftretenden Bedingungen wie Temperaturgradienten, sowie der Schmelz- und Verfestigungsvorgänge der Bauteile geschuldet.

Insbesondere ist eine Kriechfestigkeit des Bauteils 10 in Aufbaurichtung A - relativ zu einer dazu senkrechten Richtung - wie beispielsweise Richtung X aus Figur 1 - erhöht.

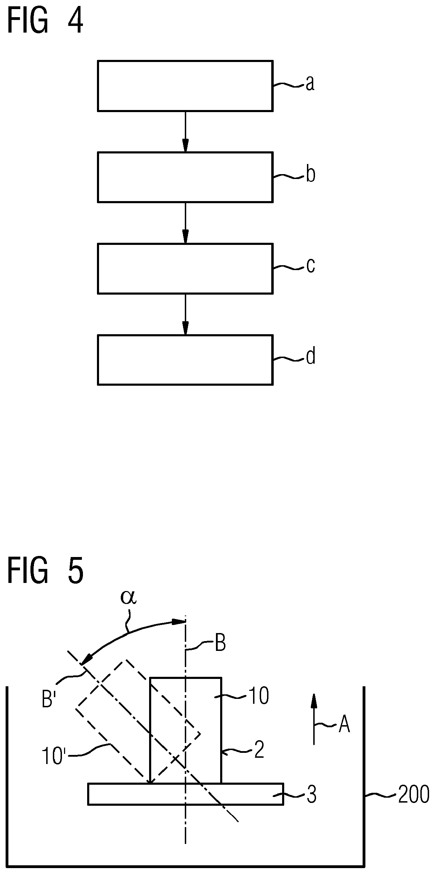

Eine Richtungsabhängigkeit kann analog zu der beschriebenen Situation auch für weitere Materialeigenschaften, beispielsweise eine Zug-, Druck-, Kompressions-, Biege-, Torsions-, oder Scherfestigkeit bzw. -belastbarkeit bestehen. Alle genannten physikalischen Größen oder Eigenschaften können - insbesondere abhängig von der (additiven) Herstellungstechnologie sein; bzw. kann die Anisotropie der Eigenschaften von dem Herstellungsverfahren abhängen. Dabei muss nicht zwangsläufig eine Aufbaurichtung A die Richtung der günstigsten oder besonders bevorzugten Eigenschaften definieren. Vielmehr kann die in diesem Sinne bevorzugte, günstige oder optimale Richtung irgendeine Raumrichtung sein, welche auch nicht mit einer Symmetrieachse des Bauteils zusammenfallen muss (vgl. Figur 5).

Figur 4 zeigt ein schematisches Flussdiagramm, welches das Verfahren gemäß der vorliegenden Erfindung andeutet.

Das erfindungsgemäße Verfahren kann ein die additive Herstellung vorbereitendes Verfahren oder ein Konfektionierungsverfahren sein oder umfassen.

In Verfahrensschritt a) wird ein Design oder eine Bauteilgeometrie festgelegt oder bereitgestellt. Normalerweise liegt die Bauteilgeometrie für die additive Herstellung des Bauteils durch CAD- oder CAM-Daten vor oder in Form von technischen Zeichnungen, die dann vorzugsweise noch in eine computerlesbare Form zu bringen sind.

Der Verfahrensschritt b) beschreibt das Definieren einer speziellen Eigenschaft des additiv herzustellenden Bauteils, welche in der Regel vom Benutzer, im Falle eines computerbasierten Verfahrens - beispielsweise durch eine CAM- und/oder CAD-Software implementiert - über eine Benutzerschnittstelle einzugeben oder zu editieren ist. Mit anderen Worten wählt der Benutzer der additiven Herstellungsanlage 200 oder ein Verwender des Verfahrens diejenige Eigenschaft, die er hinsichtlich der Orientierung des Bauteils zu optimieren wünscht. Diese Eigenschaft ist erfindungsgemäß eine mechanische Eigenschaft, nämlich eine richtungs- und materialabhängige Eigenschaft Die Eigenschaft ist weiterhin eine Kriechfestigkeit des additiv herzustellenden Bauteils, wobei das Bauteil (10) eine Komponente einer Turbine ist.

Verfahrensschritt c) beschreibt anschließend die Untersuchung einer Richtungsabhängigkeit (siehe oben) der Eigenschaft, welche abhängig von der Bauteilgeometrie ist. Die Richtungsabhängigkeit der Eigenschaft wird anhand einer Strukturanalyse von additiv hergestelltem Material untersucht. Die Kristallstruktur und/oder die Materialphasen des Bauteils (10) werden untersucht. Dies kann weiterhin mittels einer numerischen Simulation, beispielsweise einer Finite-Elemente-Methode, erfolgen. Alternativ zu einem numerischen Verfahren kann alternativ ein empirisches, phänomenologisches oder approximatives Verfahren für die Untersuchung der Richtungsabhängigkeit gewählt werden.

Erfindungsgemäß wird die Richtungsabhängigkeit der Eigenschaft anhand einer Strukturanalyse von additiv hergestelltem Material untersucht. Die Kristallstruktur und/oder die Materialphasen des Bauteils (10) werden untersucht. Es können für die Untersuchung der Richtungsabhängigkeit Materialparameter oder Standardparametersätze, beispielsweise aus einer Datenbank eingelesen werden, um die Richtungsabhängigkeit überhaupt untersuchen zu können oder zu verbessern.

Insbesondere kann die genannte Richtungsabhängigkeit materialabhängig und/oder verfahrensabhängig sein. Vorzugsweise wird die Abhängigkeit der Eigenschaft zumindest entlang der Aufbaurichtung A sowie entlang einer zu der Aufbaurichtung A senkrechten Richtung untersucht oder durchgeführt. Verfahrensschritt d) bezeichnet die Bestimmung und/oder die Anzeige einer oder mehrerer bevorzugter Orientierungen und/oder einer optimalen Orientierung des additiv herzustellenden Bauteils in der Anlage 200 bzw. relativ zu einer Oberfläche der Bauplattform 3 anhand der Untersuchung der Richtungsabhängigkeit oder deren Ergebnis.

Es ist im Rahmen der vorliegenden Erfindung auch vorgesehen, dass ein Ergebnis der Untersuchung der Richtungsabhängigkeit bzw. ein Ergebnis der Bestimmung der Orientierung in einer Datenbank gespeichert und für ein anschließendes Verfahren zur Bestimmung einer weiteren Orientierung eines additiv herzustellenden Bauteils 10 herangezogen wird. Insbesondere kann ein so genannter "best fit" berechnet und anschließend vom Benutzer oder Verwender gewählt werden.

Das beschriebene Verfahren ist vorzugsweise weiterhin in ein additives Herstellungsverfahren integriert oder implementiert, wobei das Bauteil 10 nach der Bestimmung der bevorzugten Orientierung - wie beschrieben - auch entsprechend dieser Orientierung additiv aufgebaut wird, um die gewünschten, optimierten Materialeigenschaften zu erzielen.

In Figur 5 ist schematisch eine Schnitt- oder Seitenansicht eines Bauteils 10 ähnlich zu den Figuren 1 und 2 dargestellt. Das durchgezogen konturiert dargestellte Bauteil 10 entspricht mit der eingezeichneten Hauptsymmetrieachse B vorzugsweise einer konventionellen Ausrichtung des Bauteils in einem Herstellungsraum der Anlage 200. Das gestrichen konturiert dargestellte Bauteil 10' deutet vorzugsweise mittels seiner Hauptsymmetrieachse B' eine Orientierung an, welche mittels des oben beschriebenen Verfahrens (vergleiche Figur 4) bestimmt wurde um den Winkel α relativ zur Richtung B oder zur Aufbaurichtung A geneigt ist. Insbesondere kann das Bauteil 10' derart additiv aufgebaut werden, dass es hinsichtlich seiner mechanischen Zug- oder Druckbelastung oder -festigkeit während des Betriebs optimiert ist oder bevorzugte oder optimale Eigenschaften aufweist.

Additive Herstellungsverfahren basieren vorzugsweise auf 3D CAD/CAM-Daten. Nach der Bestimmung der Orientierung des Bauteils werden die Daten zweckmäßigerweise derart aufbereitet, dass alle Informationen zur Herstellung des Bauteils und dessen relativer Orientierung vorliegen. Die beschriebene additive Orientierung wird durch den additiven Aufbau bzw. die entsprechende Herstellung durch die Aufbereitung der Daten ("slicing") umgesetzt.

Das Bauteil 10, 10' kann so durch das beschriebene Verfahren auf der Bauplattform 3 orientiert und hinsichtlich seiner Eigenschaften optimiert werden, dass die Bauteilbereiche mit der größten Spannung, dem größten mechanischen Druck- oder der größten Zugbelastung - beispielsweise durch FEM-Analyse simuliert oder optimiert - die besten mechanischen Eigenschaften haben.

Im Fall von aus dem Pulverbett aufgebauten Turbinenschaufeln als Bauteile entspricht - wie oben beschrieben - beispielsweise die Richtung mit der besten Kriechbeständigkeit der Aufbaurichtung A.

Weiterhin kann die Orientierung derart bestimmt werden, dass - für den additiven Aufbau - möglichst wenige Flächen mit einer Stützstruktur unterstützt werden müssen.

## Patentansprüche

1. Verfahren zur Bestimmung der Orientierung eines additiv herzustellenden Bauteils (10), wobei das Verfahren die folgenden Schritte umfasst:
- a) Bereitstellen einer Bauteilgeometrie für das additiv herzustellende Bauteil (10), wobei das Bauteil (10) Z eine Komponente einer Turbine ist,
- b) Definieren einer Eigenschaft des additiv herzustellenden Bauteils (10),
wobei die Eigenschaft eine material- und geometrieabhängige Eigenschaft ist, wobei die Eigenschaft weiterhin eine Kriechfestigkeit des additiv herzustellenden Bauteils (10) ist,
- c) Untersuchen einer Richtungsabhängigkeit der Eigenschaft abhängig von der Bauteilgeometrie und, wobei die Richtungsabhängigkeit der Eigenschaft anhand einer Strukturanalyse von additiv hergestelltem Material untersucht wird, wobei die Kristallstruktur und/oder die Materialphasen des Bauteils (10) untersucht werden, und
- d) Bestimmen einer bevorzugten Orientierung (1) des additiv herzustellenden Bauteils (10) in einer Anlage (100) zur additiven Herstellung anhand der Untersuchung der Richtungsabhängigkeit.

2. Verfahren gemäß Anspruch 1, wobei die Bauteilgeometrie mithilfe einer rechnerunterstützten Konstruktion bereitgestellt wird.

3. Verfahren gemäß Anspruch 1 oder 2, wobei die Eigenschaft eine von der Herstellung des Bauteils (10) abhängige Eigenschaft ist.

4. Verfahren gemäß einem der vorhergehenden Ansprüche, wobei die Richtungsabhängigkeit mittels einer numerischen Simulation untersucht wird.

5. Verfahren gemäß einem der vorhergehenden Ansprüche, wobei die Richtungsabhängigkeit der Eigenschaft mindestens entlang einer Aufbaurichtung (A) der additiven Herstellung und einer zu der Aufbaurichtung (A) senkrechten Richtung untersucht wird.

6. Verfahren gemäß einem der vorhergehenden Ansprüche, wobei ein Ergebnis der Untersuchung der Richtungsabhängigkeit in einer Datenbank gespeichert und für ein anschließendes Verfahren zur Bestimmung einer weiteren Orientierung (1) eines additiv herzustellenden Bauteils (10) herangezogen wird.

7. Verfahren nach einem der vorhergehenden Ansprüche, wobei eine Mehrzahl von bevorzugten Orientierungen (1) bestimmt wird, wobei einem Anwender des Verfahrens anschließend diese bevorzugten Orientierungen (1) angezeigt werden und wobei der Anwender zwischen den verschiedenen bevorzugten Orientierungen (1) wählen kann.

8. Verfahren zur additiven Herstellung eines Bauteils (10), umfassend das Verfahren gemäß einem der vorhergehenden Ansprüche, weiterhin umfassend das additive Aufbauen des Bauteils (10) auf einer Bauplattform (3) der Anlage (100) entlang der bestimmten bevorzugten Orientierung (1).

9. Computerlesbares Medium, umfassend ausführbare Programmanweisungen, welche geeignet sind, eine Datenverarbeitungseinrichtung die Schritte des Untersuchens (c)) und des Bestimmens (d)) gemäß Anspruch 1 durchführen zu lassen.

## Claims

1. Method for determining the orientation of a part (10) to be additively manufactured, wherein the method comprises the following steps of:
- a) providing a part geometry for the part (10) to be additively manufactured, wherein the part (10) is a component of a turbine,
- b) defining a property of the part (10) to be additively manufactured, wherein the property is a material- and geometry-dependent property, wherein the property is furthermore a creep strength of the part (10) to be additively manufactured
- c) analysing a direction dependence of the property depending on the part geometry, wherein the direction dependence of the property is analysed on the basis of a structural analysis of additively manufactured material, wherein the crystal structure and/or the material phases of the part (10) are analysed, and
- d) determining a preferred orientation (1), in an additive manufacturing plant (100), of the part (10) to be additively manufactured, on the basis of the analysis of the direction dependence.

2. Method according to Claim 1, wherein the part geometry is provided with the aid of computer-aided design.

3. Method according to Claim 1 or 2, wherein the property is a property dependent on the production of the part (10).

4. Method according to one of the preceding claims, wherein the direction dependence is analysed by means of a numerical simulation.

5. Method according to one of the preceding claims, wherein the direction dependence of the property is analysed at least in a buildup direction (A) of the additive manufacture and a direction perpendicular to the buildup direction (A).

6. Method according to one of the preceding claims, wherein a result of the analysis of the direction dependence is saved in a database and used for a subsequent method for determining a further orientation (1) of a part (10) to be additively manufactured.

7. Method according to one of the preceding claims, wherein a plurality of preferred orientations (1) are determined, wherein these preferred orientations (1) are subsequently displayed to a user of the method, and wherein the user can choose between the different preferred orientations (1).

8. Method for the additive manufacture of a part (10), comprising the method according to one of the preceding claims, further comprising the additive buildup of the part (10) on a building platform (3) of the plant (100) in the determined preferred orientation (1).

9. Computer-readable medium, comprising executable program instructions that are suitable for having a data processing device carry out the steps of analysing (c)) and of determining (d)) according to Claim 1.

## Revendications

1. Procédé de détermination de l'orientation d'une pièce (10) à fabriquer de manière additive, le procédé comprenant les stades suivants :
- a) on se procure une géométrie de pièce pour la pièce (10) à fabriquer de manière additive, la pièce (10) étant un élément d'une turbine,
- b) on définit une propriété de la pièce (10) à fabriquer de manière additive, la propriété étant une propriété qui dépend du matériau et de la géométrie, la propriété étant, en outre, une résistance au fluage de la pièce (10) à fabriquer de manière additive,
- c) on étudie une dépendance à la direction de la propriété en fonction de la géométrie de la pièce et dans lequel on étudie la dépendance en fonction de la direction de la propriété à l'aide d'une analyse de structure du matériau fabriqué de manière additive la structure cristalline et/ou les phases du matériau de la pièce (10) étant étudiée, et
- d) on détermine une orientation (1) préférée de la pièce (10) à fabriquer de manière additive dans une installation (100) pour la fabrication additive à l'aide de l'étude de la dépendance à la direction.

2. Procédé suivant la revendication 1, dans lequel on dispose de la géométrie de la pièce à l'aide d'une construction assistée par ordinateur.

3. Procédé suivant la revendication 1 ou 2, dans lequel la propriété est une propriété, qui dépend de la fabrication de la pièce (10).

4. Procédé suivant l'une des revendications précédentes, dans lequel on étudie la dépendance à la direction au moyen d'une simulation numérique.

5. Procédé suivant l'une des revendications précédentes, dans lequel, on étudie la dépendance à la direction de la propriété au moins le long d'une direction (A) d'accroissement de la fabrication additive et d'une direction perpendiculaire à la direction (A) d'accroissement.

6. Procédé suivant l'une des revendications précédentes, dans lequel on met en mémoire un résultat de l'étude de dépendance à la direction dans une base de données et on en tire parti pour un procédé venant ensuite de détermination d'une autre orientation (1) d'une pièce (10) à fabriquer de manière additive.

7. Procédé suivant l'une des revendications précédentes, dans lequel on détermine une pluralité d'orientations (1) préférées, dans lequel on indique à un utilisateur du procédé ensuite ces orientations (1) préférées et dans lequel l'utilisateur peut choisir entre les diverses orientations préférées.

8. Procédé de fabrication de manière additive d'une pièce (10), comprenant un procédé comprenant un procédé suivant l'une des revendications précédentes, comprenant en outre, l'accumulation additive de la pièce (10) sur une plateforme (3) de construction de l'installation (100), le long de l'orientation (1) préférée, qui a été déterminée.

9. Support déchiffrable par ordinateur, comprenant des instructions de programme pouvant être réalisées, qui sont propres à permettre qu'un dispositif de traitement de données puisse effectuer les stades de l'étude (c) et de la détermination (d) suivant la revendication 1.
